(19)

Europäisches
Patentamt
European
Patent Office
Office européen
des brevets

(11) **EP 2 116 968 A1**

(12) **EUROPEAN PATENT APPLICATION**

(43) Date of publication:
**11.11.2009 Bulletin 2009/46**

(51) Int Cl.:
**G06Q 30/00** (2006.01)

(21) Application number: **08251621.2**

(22) Date of filing: **06.05.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (72) Inventor: **Duddle, Ashley,**<br>  **c/o Airmax Group Plc Company**<br>**Dorset, BH31 6BE (GB)** |
| (71) Applicant: **Airmax Remote Limited**<br>**31 Black Moor Road**<br>**Ebblake Industrial Estate**<br>**Verwood, Dorset BH31 6BE (GB)** | (74) Representative: **Lawrence, John**<br>**Barker Brettell LLP**<br>**138 Hagley Road**<br>**Edgbaston**<br>**Birmingham**<br>**B16 9PW (GB)** |

(54) **Method and apparatus for rating how a vehicle is driven**

(57)    A method and system for rating how a vehicle is driven. The method comprises receiving data on a characteristic for each of a plurality of vehicles, wherein the characteristic is dependent upon how the vehicle is driven and there is a relationship between the characteristic and emissions from the vehicle and/or fuel usage, and determining an ecological rating for each vehicle based upon a value of the characteristic for the vehicle relative to a selected comparable value and how the characteristic is related to emissions from the vehicle and/or fuel usage. The system comprises a processor arranged to carry out this method.

Fig. 1

EP 2 116 968 A1

**Description**

This invention concerns method and apparatus for rating how a vehicle is driven and, in particular for rating how a vehicle is driven and how this relates to emissions from a vehicle and/or fuel usage.

Independent (often Government) bodies use test cycles to determine emissions or fuel usage from different vehicle types. The results of these test cycles can be used as a basis for estimating the emissions and fuel usage of a vehicle during a journey. However, the test cycles only determine the emissions and fuel usage under specific controlled conditions and it is very likely that during a journey these specific control conditions will not be replicated. Therefore, an estimate of the emissions and/or fuel usage during the journey based on the results of the test cycles and total mileage is likely to be inaccurate.

The true emissions and fuel usage will depend on many other factors, including driving style, not just total mileage.

Accordingly, using current techniques it is not possible for a driver to accurately determine the ecological impact of his/her driving.

According to a first aspect of the invention there is provided a method for rating how a vehicle is driven comprising receiving data on a characteristic for each of a plurality of vehicles, wherein the characteristic is dependent upon how the vehicle is driven and there is a relationship between the characteristic and emissions from the vehicle and/or fuel usage, and determining an ecological rating for each vehicle based upon a value of the characteristic for the vehicle relative to a selected comparable value and how the characteristic is related to emissions from the vehicle and/or fuel usage.

The ecological rating provides a measure that allows a driver to gauge how he/she has driven a vehicle and the impact that his/her driving style has on emissions from a vehicle and/or fuel usage. It will be understood that the term "comparable value" as used herein means a value to which another value can be compared. In one embodiment, "driving style" means how a driver drives a vehicle on one or more journeys not the fact that the driver made the one or more journeys in that vehicle.

In one embodiment, the selected comparable value may be the value of the characteristic for other vehicles of the plurality of vehicles. For instance, determining an ecological rating for each vehicle may comprise ranking the plurality of vehicles based upon the value of the characteristic for each vehicle and allocating an ecological rating to each vehicle based upon where the vehicle is ranked. In this way, the ecological rating is a measure of how one driver compares to another (not necessarily a measure of absolute emissions from the vehicle).

The method is preferably computer-implemented. In this way, the ecological rating is determine automatically.

The selected comparable value may be a value of the characteristic for the vehicle for an earlier period. By having the ecological rating based on a comparison between an earlier period and a later period, the ecological rating can be based on how the driver's driving style has changed between the two periods. In this way, the driver can determine from the ecological rating whether changes to his/her driving style have altered the impact of his/her driving on emissions from the driver's vehicle and/or fuel usage.

The selected comparable value may be a predetermined value for the characteristic, for example, the predetermined value may be a benchmark against which a driver's driving can be judged. The predetermined value may be a rated value determined by the manufacturer of the vehicle or a standard value for the characteristic determined by an independent body. In this way, the ecological rating can be determined based on a benchmark value and how close and/or what side the driver's driving is to the benchmark value.

The method may comprise calculating emissions and/or fuel usage for each vehicle from data on a plurality of characteristics for the vehicle. The method may comprise calculating emissions and/or fuel usage in-vehicle and transmitting the calculated emissions and/or fuel usage to a processor that determines the ecological ratings. Alternatively, the emission and/of fuel usage are calculated by a processor of a server that receives the data of on the plurality of characteristics for each of the plurality of vehicles.

The selected comparable value may be a predetermined distance per volume of fuel, for example, miles per gallon, or predetermined distance per weight of particulate emissions, for example, miles per grams of carbon, and the characteristic is a measured value for distance per volume of fuel or distance per weight of particulate emissions for the vehicle. For example, the predetermined distance per volume of fuel may be the manufacturer's rated mpg for the vehicle and the predetermined distance per weight of particulate emissions may be the manufacturer's rated miles per grams of carbon.

The ecological rating may be determined by comparing the measured value for distance per volume of fuel or miles per grams of carbon to the predetermined values. However, in another embodiment, determining the ecological rating comprises normalizing the characteristic, for example, a measured value for distance the vehicle travelled per volume of fuel used or weight of particulate emissions from the vehicle relative, to compensate for factors that contribute to the measured value and are not related to how the vehicle is driven. In this way, the ecological rating provides a better indication of how a driver's driving style affects emissions from the vehicle and or fuel usage as non-driving style factors do not contribute to the ecological rating.

Normalization may comprise calculating a contribution to the characteristics, such as distance the vehicle travelled per volume of fuel used or weight of particulate emissions from the vehicle, by a non-driving style factor and subtracting the contribution from the characteristic (or possibly adding the contribution to the selected comparable value). The non-driving style factor may be one or more of road conditions, traffic conditions, environmental conditions and vehicle condition/state. Accordingly, the method may comprise correlating data on a non-driving style factor, which may have been received from a source other than the vehicle, with data on characteristics received from the vehicle.

The ecological rating may be determined by grouping the plurality of vehicles based on the characteristic into two or more groups, the ecological rating being an identifier associated with the group comprising the vehicle. Grouping the vehicles reduces the number of different ecological ratings required such that the ecological rating provides a simple way for a driver to determine how ecological his/her driving style is. For example, in one embodiment, the vehicles may be grouped into three, four, five, six , seven, eight or more groups and the identifier may be "1", "2", "3", "4" etc or "A", "B", "C", "D", etc. In one embodiment, the ratings run from A to G. This is advantageous as it is analogous to energy efficiency ratings for white goods and therefore, is a concept that is already familiar to the general public. The plurality of vehicles may be grouped by the position of the vehicles in the ranking.

The data may comprise data on more than one characteristic of the vehicles and the ecological rating comprises an individual rating for each characteristic. In this way, the driver can determine which aspect of his/her driving style is comparatively adverse in terms its effect on emissions from and/or fuel usage by the vehicle, allowing the driver to isolate what he/she can change to improve his/her ecological rating.

The data may comprise data on more than one characteristic of the vehicle and the ecological rating may comprise an overall rating determined from a combination of the rankings determined for each characteristic.

The or each characteristic may be one of the emissions of the vehicle, the mileage of the vehicle, fuel usage, the engine revolutions of the vehicle, acceleration of the vehicle, deceleration of the vehicle, duration of periods of substantially constant speed, duration of periods of speed above and/or below a predetermined threshold, duration of periods in which the vehicle is stationary with the engine running, degree of revving of the vehicle while stationary, fuel usage, duration of driving with air conditioning on, number of journeys below a predetermined distance and/or any other suitable characteristic of the vehicle that can be determined from sensors on the vehicle and is linked to emissions and/or fuel usage.

The method may comprise calculating the emissions of the plurality of vehicles from the data. Accordingly, the method may comprise providing an ecological rating in accordance with the invention in combination with an absolute value (or at least an estimated value) of emissions from the vehicle. This will allow the driver not just to determine how his/her driving style affects emissions from the vehicle but also the environmental impact of the vehicle use.

According to a second aspect of the invention there is provided a method of providing insurance comprising making an agreement to provide insurance for a driver and vehicle combination and, in response to the making of the agreement, presenting information on an ecological rating for the vehicle determined in accordance with the first aspect of the invention.

The provision of an ecological rating may provide additional incentive for a driver to agree to the insurance agreement.

The agreement to provide insurance may comprise the provision of awards to an insured under the agreement in return for the vehicle achieving a predetermined ecological rating. In this way, the insured driver can receive rewards for driving more ecologically and/or improving his/her driving in terms of its ecological impact. For example, the rewards may be a reduction in insurance premium, a reward of money or monies worth or a special recognition, for example by publication in a newsletter, on a website or otherwise, of the driver's achievement.

According to a third aspect of the invention there is provided a system for providing information about a vehicle comprising a communication link for communicating with an output device and a processor, the processor arranged to receive data on a characteristic for each of a plurality of vehicles, wherein the characteristic is dependent upon how the vehicle is driven and there is a relationship between the characteristic and emissions from the vehicle and/or fuel usage, determine an ecological rating for each vehicle, the ecological rating based upon a value of the characteristic for each vehicle relative to a selected comparable value and how the characteristic is related to emissions from the vehicle and/or fuel usage, and send the ecological rating to the output device via the communications link.

The apparatus advantageously determines an ecological rating associated with a vehicle that is indicative of how ecological is a driver's driving style.

The processor may determine an ecological rating for each vehicle by ranking the plurality of vehicles based upon the value of the characteristic for each vehicle and allocating an ecological rating to each vehicle based upon where the vehicle is ranked.

The processor may determine the ecological rating by comparing the value of the characteristic for an earlier period to the value of the characteristic for a later period and allocating an ecological rating based on changes in the value for the characteristic between these periods.

The processor may be arranged to determine the ecological rating by grouping the plurality of vehicles based on the characteristic into two or more groups, the ecological rating being an identifier associated with the group comprising the vehicle.

The processor may group the plurality of vehicles by the position of the vehicles in the ranking.

The data may comprise data on more than one characteristic of the vehicle during the journey and the processor may determine the ecological rating by determining an individual rating for each characteristic.

Alternatively or additionally, the processor may determine an overall rating determined from a combination of the ratings determined for each characteristic.

The or each characteristic may be one of the emissions of the vehicle, the mileage of the vehicle, fuel usage, the engine revolutions of the vehicle, acceleration of the vehicle, deceleration of the vehicle, duration of periods of substantially constant speed, the duration of periods of speed above and/or below a predetermined threshold, duration of periods in which the vehicle is stationary with the engine running, degree of revving of the vehicle while stationary, fuel usage, number of journeys below a predetermined distance and/or any other suitable characteristic of the vehicle that can be determined from sensors on the vehicle.

The processor may calculate the emissions of the plurality of vehicles from the data.

The processor may be arranged to communicate remotely with an electronic control unit of at least one of the vehicles to obtain the data.

According to a fourth aspect of the invention, there is provided a data carrier having instructions thereon that when executed by a processor cause the processor to carry out the method of the first aspect of the invention.

According to a fifth aspect there is provided a method of reducing vehicle emissions by providing feedback to drivers, the feedback to a particular driver comprising an ecologically friendly rating derived from how that driver has been driving; and wherein the rating is derived from at least one monitored characteristic of the vehicle that is dependent upon how the vehicle is driven, the at least one characteristic including one or more from the group:-

1) miles driven,
2) predicted $CO_2$ produced, or a factor relating to $CO_2$ production,
3) predicted hydrocarbons produced, or a factor relating to hydrocarbon production.
4) predicted nitrogen oxides, produced or a factor relating to nitrogen oxide production,
5) duration of driving above a predetermined speed,
6) duration of driving at engine revolutions above a predetermined threshold,
7) acceleration of the vehicle,
8) deceleration of the vehicle,
9) duration of periods of substantially constant speed,
10) duration of periods in which the vehicle is stationary with the engine running,
11) fuel usage;
12) degree of revving of the vehicle while stationary;
13) duration of driving with air conditioning on; and
14) a number of journeys below a predetermined distance.

According to a sixth aspect there is provided a system for generating an ecological rating for driver performance comprising a processor, a vehicle characteristic database and a driving performance history database,
the driving performance history database comprising metrics measured from a driver's vehicle indicative of how the vehicle has been driven over time, and the vehicle characteristic database comprising factors related to a range of types of vehicle and, which factors influence the amount of and/or characteristics of vehicle exhaust emissions produced by vehicles of each type when driven, and
the processor is arranged to use the data from the driving performance history database and the vehicle characteristic database to generate a driver ecological rating indicative of the level of vehicle exhaust emissions produced by the driver.

According to a seventh aspect of the invention there is provided a method of driver training comprising carrying out the method of the first aspect of the invention to determine ecological ratings for a plurality of drivers and training the drivers based on the ecological rating.

For example, a driver may be given more or less training dependent on their ecological rating or a driver may be given a specific type of training, such as training on controlled braking or methods for retaining constant speed, with the aim of changing the driving style of the driver to reduce emissions and/or fuel usage.

According to a eighth aspect of the invention there is provided a method of reducing fuel usage of a fleet of vehicles comprising carrying out the method of the first aspect of the invention to determine ecological ratings for the vehicles, identifying from the ecological rating vehicles that have emissions and/or fuel usage above a predetermined threshold and repairing and/or modifying the identified vehicle to reduce emissions and/or fuel usage from the vehicle.

According to a ninth aspect of the invention there is provided a vehicle comprising a processing unit arranged to receive data on a characteristic of the vehicle, wherein the characteristic is dependent upon how the vehicle is driven and there is a relationship between the characteristic and emissions from the vehicle and/or fuel usage, and determining an ecological rating for the vehicle based upon a value of the characteristic for the vehicle relative to a selected comparable value and how the characteristic is related to emissions from the vehicle and/or fuel usage.

The vehicle may comprise means, such as a transceiver for communicating with a server, the processor arranged to receive the selected comparable value from the server.

According to a tenth aspect of the invention there is provided a method for rating how a vehicle is driven comprising receiving data on a characteristic for a vehicle, wherein the characteristic is dependent upon how the vehicle is driven and there is a relationship between the characteristic and emissions from the vehicle and/or fuel usage, and determining an ecological rating for the vehicle based upon a value of the characteristic for the vehicle relative to a selected comparable value and how the characteristic is related to emissions from the vehicle and/or fuel usage.

According to an eleventh aspect of the invention there is provided a method for determining emissions and/or fuel usage from a vehicle comprising receiving data on a plurality of monitored characteristics of the vehicle and calculating emissions and/or fuel usage from the data.

The plurality of monitored characteristics may include engine parameters, such as engine load, fuel injector opening times, engine revolutions and volumes of fuel injected. Use of data on engine parameters may result in a more accurate determination of emissions and/or fuel usage. The method may comprise determining the instantaneous emissions from the vehicle.

Embodiments of the invention will now be described, by example only, with reference to the accompanying drawings, in which:-

**Figure 1** is a schematic view of apparatus for generating an ecological rating according to an embodiment of the invention;

**Figure 2** is a flow chart illustrating a method for determining an ecological rating in accordance with an embodiment of the invention:

**Figure 3** is a dataflow diagram of a system in accordance with another embodiment of the invention;

**Figure 4** is a flow chart illustrating a method for determining an ecological rating in accordance with another embodiment of the invention;

**Figure 5** is a flow chart illustrating a method of making an insurance agreement in accordance with an embodiment of the invention;

**Figure 6** (which extends across two pages) is an embodiment of a display in accordance with the invention; and

**Figures 7 to 11** are embodiments of further displays in accordance with the invention.

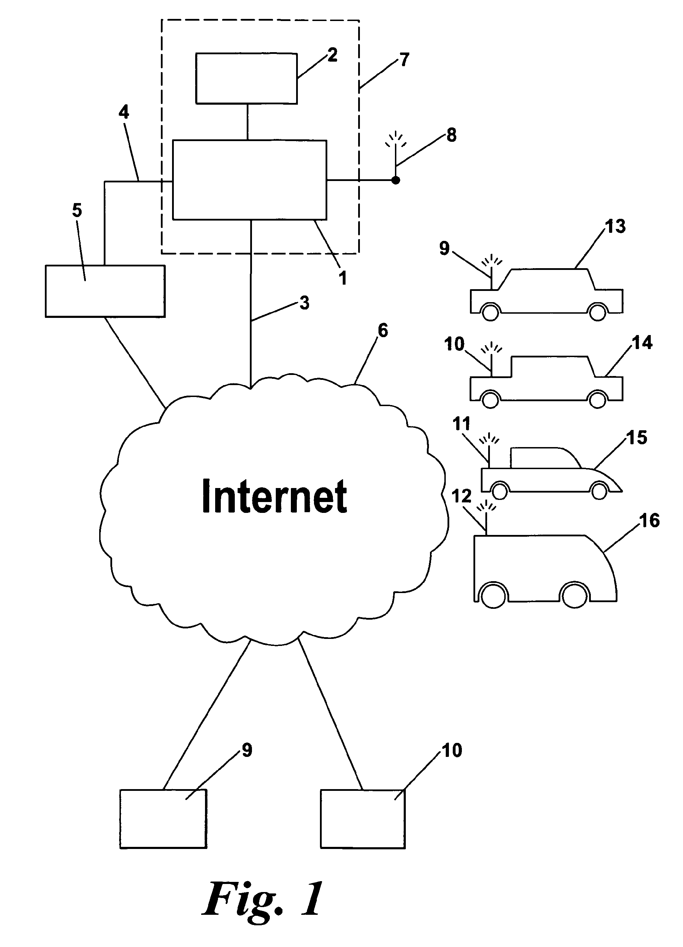

Referring to Figure 1, a system for providing information about a vehicle comprises a processor 1 of a computer 7 and memory 2. The processor 1 is connected to a communication link 3. 4 for communicating with output devices, in this embodiment the Internet 6 and a server 5 for providing insurance services. The server 5 may itself be connected to the Internet 6. The processor 1 is also connected to a transceiver 8 that communicates with transceivers 9 to 12 located on vehicles 13 to 16. The transceivers 9 to 12 are connected with an in-vehicle processing unit.t, for example the engine control unit (ECU), the on board diagnosis (OBD) unit and/or other in-vehicle processing unit, (not shown) in each vehicle. The in-vehicle processing unit and transceiver 9 to 12 are arranged to transmit data on characteristics of the vehicle monitored by the in-vehicle processing unit. In this embodiment, four vehicles are shown with each vehicle being of a different type, but it will be understood that the system may communicate with more than four vehicles and the vehicles may be of the same or different type.

Memory 2 has stored thereon a computer program that when executed by the processor 1 causes the processor 1 to receive from each of a plurality of vehicles 13 to 16 data on characteristics of each vehicle 13 to 16. At least one of the characteristics is both dependent upon how the vehicle is driven and is related to emissions from each vehicle and/or fuel usage. In this embodiment, the characteristic include the mileage of the vehicle, the engine revolutions of the vehicle, acceleration of the vehicle, deceleration of the vehicle, relative duration of periods of substantially constant speed, the relative duration of periods of speed above and/or below a predetermined threshold, duration of periods in which acceleration is above a predetermined threshold (sharp acceleration), duration of periods in which deceleration is above a predetermined threshold (sharp deceleration), duration of periods in which the vehicle is stationary with the engine running, the duration of driving with air conditioning on, fuel usage and/or the number of journeys below a predetermined distance. The processor 1 may periodically pole the in vehicle processing units of vehicles 13 to 16 for up-dated data or the data may be continuously transmitted to processor 1.

The memory 2 may store the data in a driving performance history database and comprise a vehicle characteristic database comprising factors related to a range of types of vehicle and, which factors influence the amount of and/or characteristics of vehicle exhaust emissions produced by vehicles of each type and fuel usage when the vehicle is driven.

The computer program caused the processor 1 to retrieve data from the driving performance database and the vehicle characteristic database and determine an ecological rating for each vehicle from the data. The ecological rating is based upon a value of the or each characteristic for the vehicle relative to a selected comparable value and how the or each characteristic is related to emissions from the vehicle and/or fuel usage.

In this embodiment, the ecological rating is a scale that provides a measure of how your driving style affects emissions from and/or fuel usage by the vehicle. For example, for acceleration, the ecological rating may indicate a driving style that produces higher emissions and/or fuel usage the higher the average acceleration of the vehicle. In this embodiment, a separate ecological rating is determined for each characteristic, however it will be understood that on another embodiment, an overall emission rating may be determined by combining the data on all of the characteristics of the vehicle.

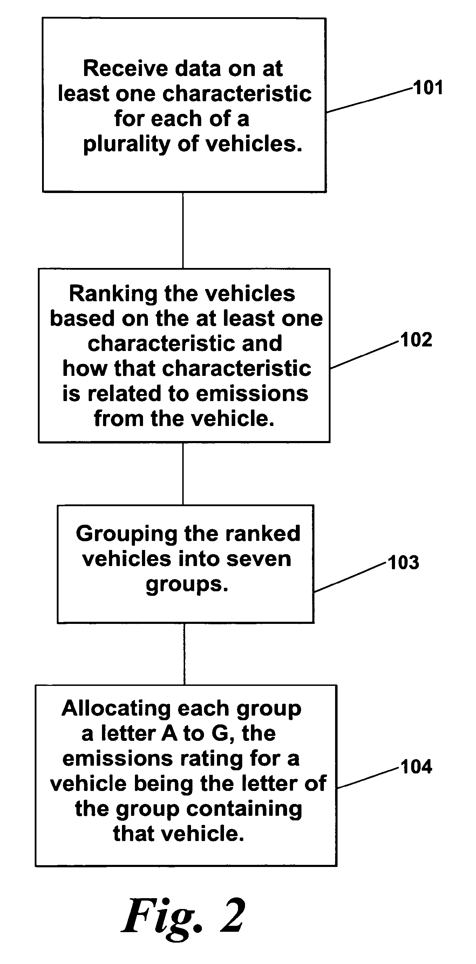

Referring to Figure 2, in this embodiment, after receiving the data in step 101, the processor 1 is caused to determine an ecological rating for each vehicle by comparing each characteristic of the vehicle to comparable values for the other vehicles. Accordingly, in step 102, the processor 1 ranks the plurality of vehicles for each characteristic based upon the value of the characteristic for each vehicle.

For example, the processor 1 may rank the vehicles for a characteristic by selecting a first vehicle in a list of the plurality of vehicles and determining the value of a first characteristic of the selected vehicle, for example acceleration. This determined value is stored in memory 2 as the selected comparable value together with an identifier of the vehicle having the selected comparable value (initially an identifier associated with the first vehicle in the list).

The processor 1 then moves to the next vehicle in the list to determine the value of the same characteristic for that vehicle and compares the value for the second vehicle to the selected comparable value stored in memory 2. If the value for the second vehicle is higher then the selected comparable value stored in memory 2, then the processor 1 changes the selected comparable value stored in memory 2 to the value of the characteristic for the second vehicle and identifies that this value belongs to the second vehicle. If the value of the characteristic for the second vehicle is lower the selected comparable value stored in memory 2 then the processor 1 does not change the selected comparable value stored in memory 2.

The processor 1 then goes onto compare the selected comparable value stored in memory 2 to the corresponding value for the next vehicle and so on for all the vehicles in the list. At the end of the process, stored in memory 2 as the selected comparable value will be the highest value for the characteristic for all of the plurality of vehicles and an identifier identifying the vehicle to which the value belongs. The processor 1 transfers the identifier to another location in memory 2 to commence the formation of a ranking of the vehicles based on that characteristic. The vehicle that has been identified as having the highest value for that characteristic is then removed from the list of vehicles and the process is repeated to find the vehicle with the next highest value for that characteristic and so on, with each vehicle being the placed sequentially in the ranking. In this way, a ranking of the vehicles is built up for that characteristic. This process is repeated for each relevant characteristic.

This process will result in rankings for each characteristic. For example, in this embodiment, the rankings could be:

For average acceleration from highest to lowest: vehicle 13, vehicle 14, vehicle 15, vehicle 16

For average speed from highest to lowest: vehicle 14, vehicle 13, vehicle 16. vehicle 15

For average engine revolutions from highest to lowest: vehicle 14, vehicle 16, vehicle 15, vehicle 13

The processor 1 then, in step 104, allocates an ecological rating to each vehicle for each characteristic based upon where the vehicle is ranked. In the example above, vehicle 13 is given an ecological rating indicating a driving style that results in very high emissions and/or fuel usage (for example, a rating "D") for acceleration, an ecological rating indicating a driving style that results in high emissions and/or fuel usage (for example "C") for average speed but an ecological rating indicating a driving style that results in very low emissions and/or fuel usage (for example "A") for average engine revolutions. It will be understood that the ecological rating attributed to a characteristic will depend on how that characteristic is related to emissions from the vehicle and/or fuel usage. For example, for certain characteristics, such as a duration of periods of constant speed, a higher value may result in an ecological rating indicating a driving style that results in lower emissions and/or fuel usage, as driving at constant speed will help to reduce emissions and/or fuel usage compared to driving at constantly fluctuating speeds.

The processor 1 may also calculate/predict an absolute value for emissions from each of the vehicles from the data. The emissions may be carbon dioxide, carbon monoxide, hydrocarbons and/or nitrogen oxides.

The processor may send the ecological rating to specified destinations, in this case an insurance server 5 and individual clients 9, 10 via the output devices 5, 6.

The ecological rating may be displayed to a user as a webpage, after the user has logged on to an account using personal login details such as a username and password, as an email, text message or by another suitable communication method.

As well as or alternatively from generating ecological ratings by comparing all the plurality of vehicles to each other, the vehicles may be sub-divided into groups, for example based on vehicle type, such as Ford Mondeos, hatchbacks, Hybrids, etc, or other attributes, such as age of the driver or the level of driver experience or training, and a "sub-group" ecological rating is determined by comparing vehicles in that sub-group. In order to do this, the memory 2 may have stored therein a database on driver characteristics.

As well or alternatively from determining ecological ratings for individual characteristics, the apparatus may determine an overall ecological rating for the vehicle. For example, the overall ecological rating may comprise an average of the ecological ratings determined for each individual characteristic.

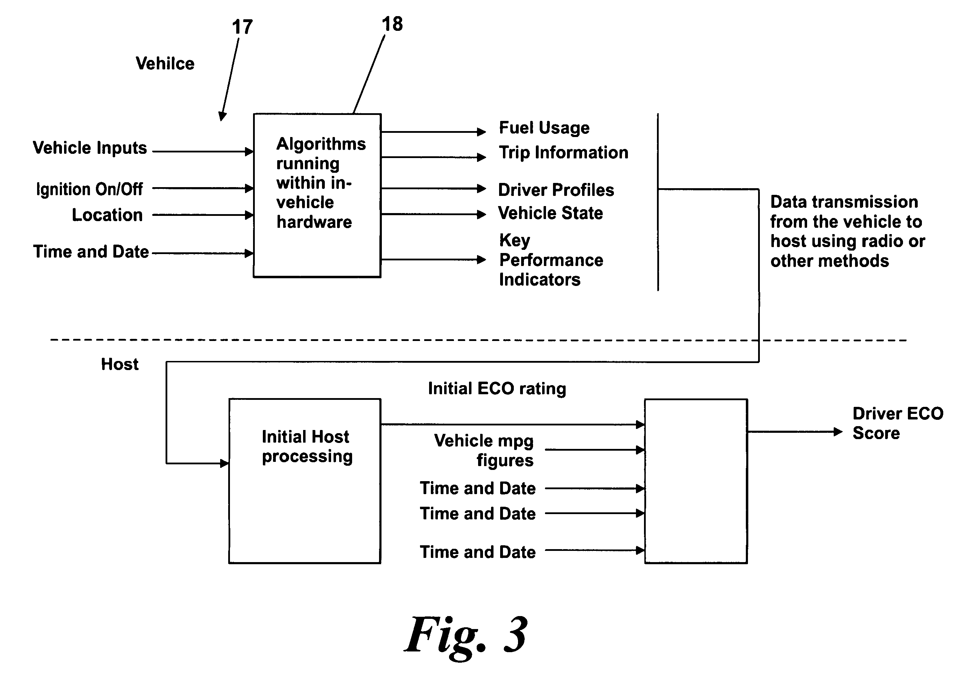

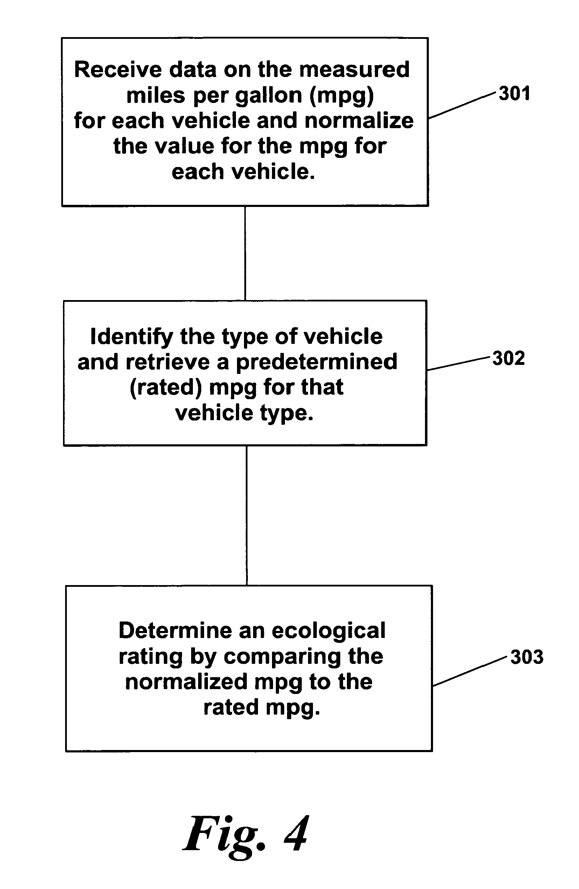

An alternative method for determining an ecological rating will now be described with reference to Figures 3 and 4. In this embodiment, each vehicle 13 to 16 comprises an in-vehicle processing unit 18 that receives data 17 recorded by sensors and ECUs (not shown) in the vehicle. This data 17 may comprise data on vehicle characteristics such as vehicle speed, engine revolutions, engine load, air mass, engine coolant temperature, air temperature, fuel tank level, injector volumes, faults - damages or incorrectly operating/out of specification parts, accelerator position, status of air conditioning (e.g. on or off or temperature setting), tyre pressure, position of windows and/or sunroof, acceleration, events from vehicle ECU modules, e.g. anti-lock braking (ABS), electronic stability programme (ESP), traction control, airbag and steering wheel position.

The in-vehicle unit 18 is programmed to use a Kalman filter algorithm to produce from the data a measure (estimate) of fuel usage. The Kalman filter combines the long term statistical accuracy and repeatability of fuel tank measurements with the short term accuracy of the directly measured engine parameters (engine load, fuel injector opening times, engine revolutions, injected volume, etc).

The in-vehicle unit 18 also generates trip information, driver profiles, vehicle statistics and key performance indicators. In this embodiment, the driver profiles are histograms derived from the vehicle inputs of speed profiles, engine revolution profiles, acceleration and deceleration profiles, idle time profiles, throttle position profiles, engine demand/load profiles, driving manoeuvre profiles (for example, number of lane changes).

The key performance indicators include speed above a predetermined value for longer than a defined time period (for example, greater than 100mph for more than 10s, greater than 90mph for more than 30s, greater than 70mph for more than 10mins), acceleration levels (positive and negative indicating acceleration and braking, at greater than defined and programmed values), driving times exceeding a defined time period (for example, more than 2 hours continuous driving, more than 8 hours driving within 24 hours, a break between driving of less than 8 hours at the end of the defined working day) and erratic driving events (e.g. very high lateral acceleration, wheel spin, brakes locking).

All events, fuel levels and profiles have an accurate start and stop time and are time stamped.

The in-vehicle unit 18 sends this information via the transmitter 9, 10. 11, 12 to the processor 1 of computer 7.

The processor 1 determines an ecological rating for each vehicle by comparing the measured fuel usage of the vehicle sent to the processor 1 by the in-vehicle unit 18 to a selected comparable value, for example a predetermined fuel usage value expected for that type of vehicle.

For example, the predetermined fuel usage value may be the rated miles per gallon (mpg) (or equivalent rating for distance travelled per volume of fuel) determined by a manufacturer. The manufacturers often determine these rated values based on what they believe is the best a driver can reasonably achieve with the vehicle.

Referring to Figure 4, in this embodiment, determination of an ecological rating comprises, in step 301, determining a "normalized" mpg from the measured mpg sent to processor 1 to remove from the measured mpg a contribution resulting from non-driving style related factors.

In step 302, the type of vehicle is identified and the rated mpg for that type of vehicle is retrieved from data stored in the vehicle characteristic database.

In step 303, an ecological rating is determined by comparing the normalized mpg to the rated mpg and assigning an ecological rating based on the difference between the normalized mpg and the rated mpg. For example, the ecological rating may be the ratio of the normalized mpg to the rated mpg or the percentage difference between the normalized mpg and the rated mpg. The ecological rating may be indicia, such as a number or letter, attributed to a set difference between the normalized mpg and the rated mpg, for example, an ecological rating dependent upon whether the difference is above or below a predetermined threshold. For example, if the percentage difference is less than 5% then the ecological rating may be 0.5, if the difference is between 5% and 10% then the ecological rating may be 1, if the difference is between 10% and 15% then the ecological rating may be 1.5 and so on.

In one embodiment, an ecological rating may be provided during each stage of the normalizing process such that the driver can see how the ecological rating changes as different non-driving style factors are progressively factored out of the calculation.

An example, of an embodiment of normalizing the measured mpg will now be described.

The measured mpg may be for a preset period, for example a month, and the processor 1 may retrieve from the driving performance history database the average mpg for the vehicle over an extended period longer than that preset period, for example a year. The processor 1 determines the difference between the average mpg over the extended period and the rated mpg and adds this difference to the measured mpg. This gives a (at least partially) normalized mpg that takes into account physical characteristics of the vehicle present over the past year that may affect the achievable mpg that are not related to how the vehicle is driven, for example, age of car, minor or major faults with the vehicle, damage to the vehicle, etc.

For example, the vehicle may have achieved an average mpg of 35mpg over the extended period and have a rated mpg of 40mpg. The measured mpg over the latest preset period may be 25mpg. The normalized mpg is determined by determining the difference between the average mpg and the rated mpg, in this case 5mpg, and adding this on to the measured mpg to give a part normalized mpg of 30mpg.

The measured mpg may also be normalized to take into account the road conditions during the period for which the ecological rating is being determined. For example, the vehicle may comprise GPS and communicate to the processor 1 data on where the vehicle has been based on data generated by the GPS. This data may be used to determine the type of road on which the vehicle travelled. For example, the processor 1 may correlate the GPS data with data on the type of roads at those locations. The data on the types of road at different locations may be stored in a database in memory 2 or may be obtained from another source, for example from the Internet.

The measured mpg may be normalized by applying a weighting to the measured mpg dependent on the types of road on which the vehicle has travelled. For example, for motorway (highway) driving the road is likely to be very smooth and flat and therefore, the driver may be expected to achieve a mpg close to the rated mpg and no weighting is applied to the measured mpg achieved during motorway driving.

However, for main roads (such as A-roads) the surface of the road may be expected to be slightly worse than a motorway and therefore, a main road weighting is applied to the mpg to normalize the mpg achieved during main road driving to take into account the increase in mpg resulting from the road conditions. For minor roads (such as B-roads), the road surface is expected to be much worse than a motorway and worse than a main road and therefore, a minor road weighting is applied to the mpg achieved during minor road driving to normalize the mpg to take into account the increase in mpg achieved due to the poor road conditions.

For example, the major road weighting may be a 5% reduction in the measured mpg and the minor road weighting may be a 10% reduction in the measured mpg. Therefore, if the measured mpg is 25mpg but for 1/3 of the time the journey was on main roads and another 1/3 of the time the journey was on minor roads, the normalized mpg, $N_{mpg}$, may be calculated using the sum:-

$$N_{mpg} = \left(W_{minor} \times M_{mpg}\right)T_{minor} + \left(W_{major} \times M_{mpg}\right)T_{major} + \left(W_{motorway} \times M_{mpg}\right)T_{motorway},$$

wherein $W_{minor}$ is the weighting for minor roads, in the example, 10%, $W_{major}$ is the weighting for major roads, in this example 5%. $W_{motorway}$ is the weighting for motorways, in this example 0%, $M_{mpg}$ is the measured mpg for the vehicle, $T_{minor}$ is the fraction of time the vehicle spent on driving on minor roads, $T_{major}$ is the fraction of time the vehicle spent on driving on major roads and $T_{motorway}$ is the fraction of time the vehicle spent on driving on motorways.

For the example given above, the normalized mpg taking account of the road conditions would is ((1.1x25) + (1.05x25) + (25))/3=26.25mpg.

It will be understood that the in other embodiments, weightings may be attributed to other aspects of the road conditions, for example, incline of the road or/and whether the road is an urban or rural road.

This mpg normalized for road conditions and the mpg normalized for the physical condition of the vehicle may be combined to give a normalized mpg of 31.25mpg.

The measured mpg may also be normalized to take into account the traffic conditions. For example, the processor 1 may receive information on the traffic conditions on the roads (e.g. in terms of average speed of the traffic on a stretch of road) and determine from this data and data received from the vehicle, the average speed of traffic at the time the journey was made in the vehicle. The processor 1 then determines the difference between the average speed of the traffic and an optimum vehicle speed at which the lowest emissions and/or fuel usage per mile is achieved, for example 50mph. A weighting is then determined from the difference between the average traffic speed and the optimum vehicle speed and this weighting is applied to the measured mpg to normalize the mpg before determination of the ecological rating. The weighting may be determined by a function or a look-up table, stored in the vehicle characteristic database, that gives the characteristic mpg for a vehicle of that type for each speed.

For example, a vehicle's mpg may typically be 35mpg at 30mph but optimally 40mpg at 50mph. A measured mpg of a vehicle may be 25mpg on a road on which the average traffic speed is 30mph. The processor 1 on receiving this information determines the typical mpg for that vehicle at that speed, in this case 35mpg, and subtracts that from the mpg at the optimum speed, in this case 40mpg at 50mph. This gives a difference of 5mpg which can be added to the measured mpg to give a normalized mpg of, in this example, 30mpg.

Again the mpg normalized to take into account traffic conditions may be combined with the normalization due to road conditions and current vehicle conditions to yield a combined normalized mpg of 36.25mpg.

The measured mpg may be normalized further to take into account environmental conditions (humidity, temperature, rain, snow. wind) and vehicle state (e.g. cold or running normally). The processor 1 may receive data on types of road, traffic conditions and weather conditions from a specified source, for example via the Internet.

Once the processor 1 has completed normalization of the measured mpg to remove non-driving style related factors from the measured mpg, the processor 1 determines an ecological rating by comparing the normalized mpg to the rated mpg. For example, in the embodiment wherein the ecological rating is the percentage difference between the normalized mpg and the rated mpg, for a normalized mpg of 36.25mpg and a rated mpg of 40mpg, the ecological rating would be approximately 9.375. In this embodiment, the lower the ecological rating the lower the impact your driving style has on emissions and/or fuel usage.

An ecological rating may be determined during each stage of the process of normalizing the measured mpg. The table below illustrates how the ecological rating may be presented for each stage of the normalization process.

| Non-driving style factor for which the MPG has been normalized | Ecological Rating |
| --- | --- |
| Un-normalized measured mpg | + 2.5 |
| Average mpg for your vehicle/physical condition of vehicle | + 2.0 |
| Road conditions | + 1.6 |
| Environmental conditions | + 1.3 |
| Traffic conditions | + 1.0 |
| Final Ecological Rating | + 1.0 |

In other embodiments, the measured emissions from the vehicle are compared to rated emission from the vehicle to determine the ecological rating. Furthermore, normalization has been described above by normalizing the average mpg based on the average traffic conditions, total road usage over a preset period. However, in another embodiment, the measured mpg may be normalized based on a more detailed subdivision of the vehicles journeys and the conditions on those journeys. For example, the preset period maybe a month but normalization of the measured mpg may be carried out on an analysis of the vehicles journeys each hour or day.

The processor 1 may further analysis the data received from the vehicle 13 to 16 to determine what driving style factors have contributed to the ecological rating. These driving style factors may comprise:-

• Driving at high speeds
• Driving in inappropriate (too high or too low) gears causing the engine to become less efficient
• Spending long times idling - e.g. having the engine running but with the vehicle not moving
• Harsh acceleration and deceleration (braking)
• Driving with the engine cold
• Driving with faults in the vehicle
• Not adequately maintaining the serviceability of the vehicle (using old oil, old spark plugs and other wearable parts, etc)
• Refuelling when the fuel is warm (when it evaporates more)
• Driving with the windows open
• Driving with the air-conditioning on
• Driving with low tyre pressure

The processor 1 may estimate the effect these factors have on emissions from the vehicle and/or fuel usage and from this estimation the fraction of the ecological rating that is due to each factor. For example, the vehicle characteristic database may have stored therein algorithms for calculating the percentage increase in emissions and/or fuel usage resulting from each driving style factor. The processor 1 uses the data received from the vehicle 13, 14, 15, 16 and the algorithm in the vehicle characteristic database to estimate the percentage increase in emissions and/of fuel usage from the vehicle as a result of the driver's driving style. The ecological rating can then be divided into fractions based on the determined percentages and each fraction of the ecological rating may be associated with the corresponding driving style factor to which that fraction of the ecological rating is attributed.

For example, the processor may calculate that 3% of the increase in emissions is due to excessive speed, 5% inappropriate gear choice (harsh revving), 5% excessive idling, 22% harsh acceleration, 20% harsh braking, 15% due to short trips when the engine is cold, 6% due to driving with faulty components, 9% due to refuelling at inappropriate times, 10% due to driving with open windows, 5% due to driving with air conditioning on and 0% due to driving with low tyre pressure. Using these calculations a breakdown of the ecological rating may be displayed, for example, a breakdown of an ecological rating of 2 may be displayed as follows:-

| High Speed | 0.06 |
|---|---|
| Inappropriate Gears (Revving) | 0.1 |
| Excessive Idling | 0.1 |
| Harsh Acceleration | 0.44 |
| Harsh Braking | 0.4 |
| Short Trips where the engine is cold | 0.3 |
| Driving with faulty engine components | 0.12 |
| Re-fuelling at in appropriate times | 0.18 |
| Driving with the windows open | 0.2 |
| Driving with air conditioning on | 0.1 |
| Driving with low tyre pressure | 0.0 |

The processor 1 may then determine a prediction of the fuel saving that could be achieved through improvements in the driver's driving style and may be the financial savings based on that fuel saving For example, the processor 1 may generate a statement advising the driver on how to change his/her driving to improve his/her ecological rating and the consequence of such a change. An example of such a generalised statement is "by reducing your rate of acceleration by 1m/s$^2$ you could reduce your mpg by 2mpg and reduce your monthly fuel bill by &5".

In a different embodiment, the in-vehicle unit 18 or processor 1 calculates from the monitored data the emissions of the or each vehicle. The calculated emissions may be compared to an emissions rating to determine an ecological rating. As with the above described embodiment, the calculated emissions may be normalized to compensate for non-driving style factors that contribute to the emissions of the vehicle and the ecological rating determined by comparing the normalized emissions to the rated emissions for the vehicle.

In one embodiment, emissions may be determined from the fuel usage. The amount of emissions produced per volume of fuel burned will depend on many factors including the efficiency of the engine. Typically, almost 99% of the fuel is burned in an efficient vehicle, however in older vehicles and when the engine is cold, such efficient burning of the fuel may not occur. For petrol, a 100% efficient engine would produce a weight of $CO_2$ three times that of the weight of petrol used. However, in general, petrol cars emit about 2.34 kg of carbon dioxide per litre of fuel burned, diesels emit about 2.68 kg, and LPG cars emit 1.5kg. According to the US Environmental Protection Agency, 1 liter of gasoline produces 2.3433 kg of CO2 when burned, and 1 liter of diesel produces 2.6889 kg of CO2 when burned. These figures can be used to calculate from fuel usage the quantity of emissions from a vehicle.

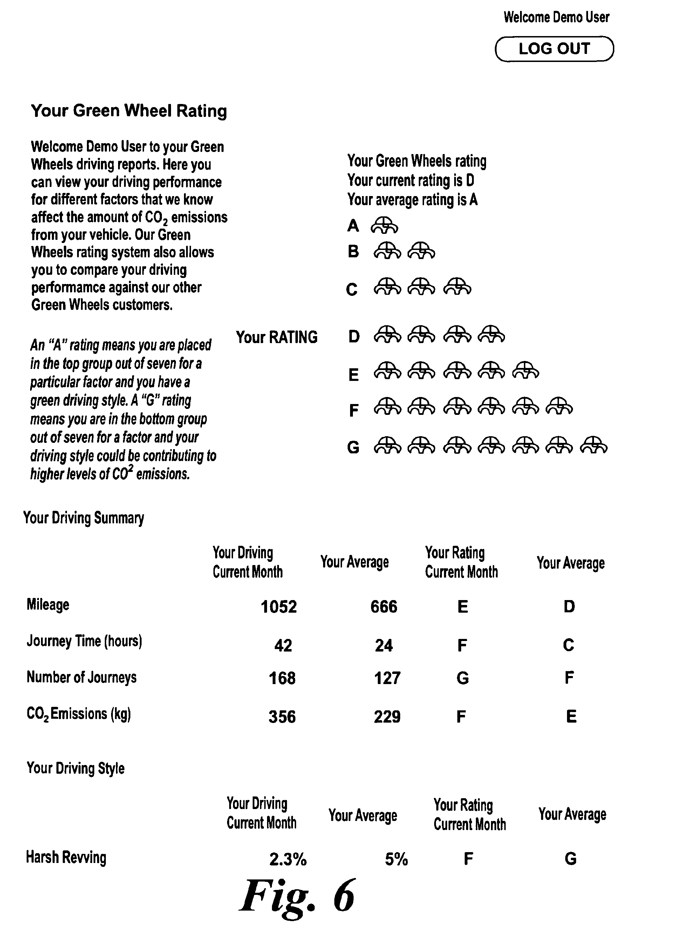

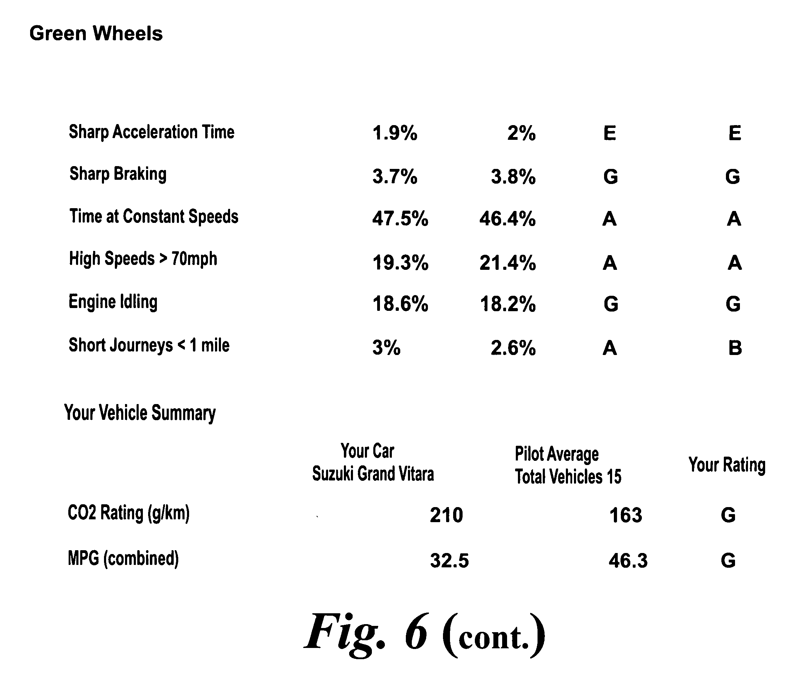

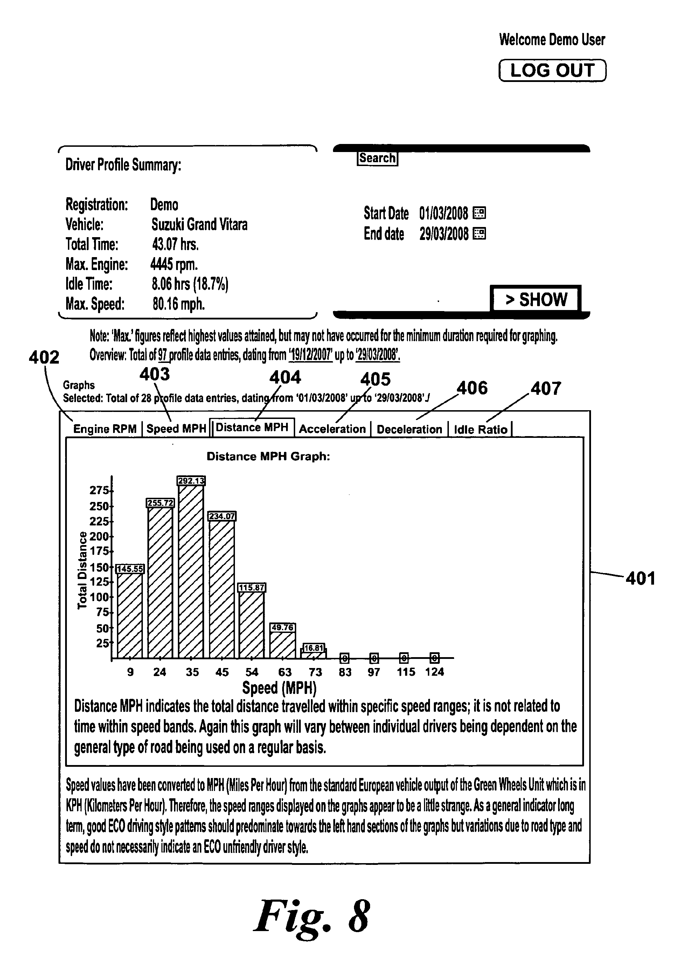

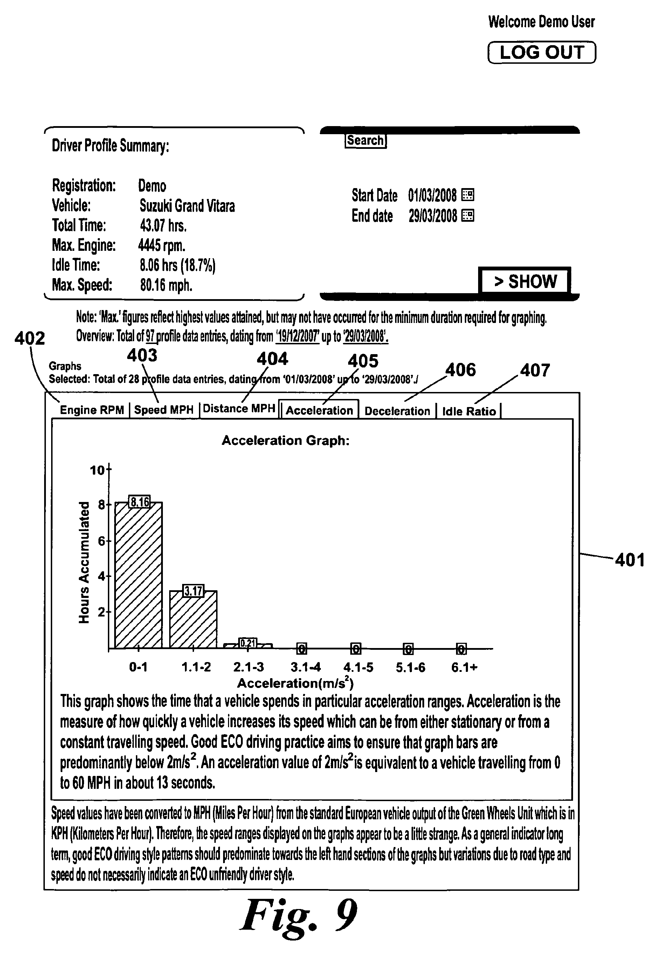

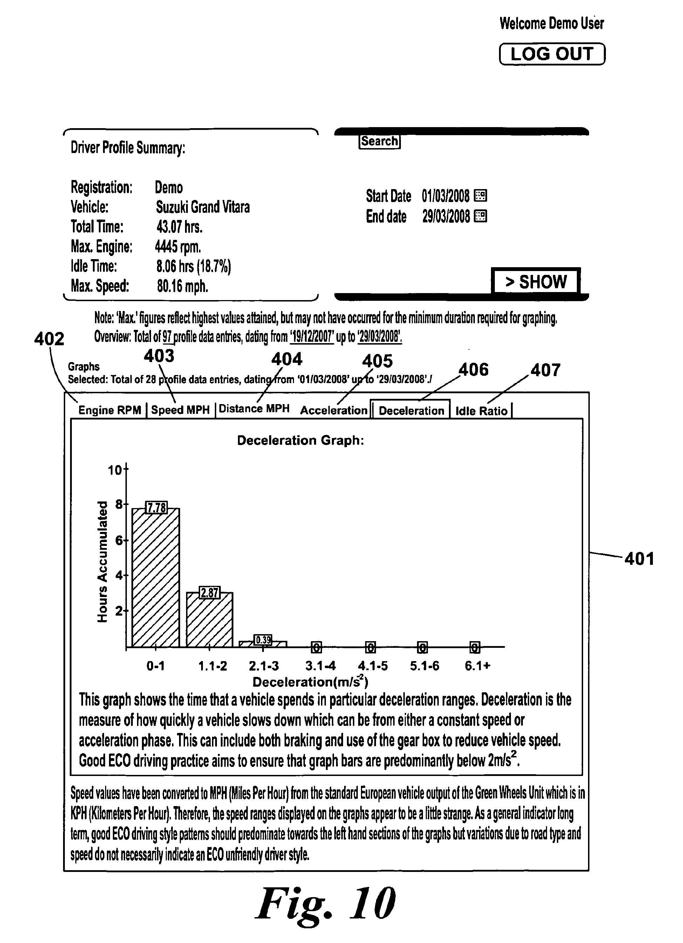

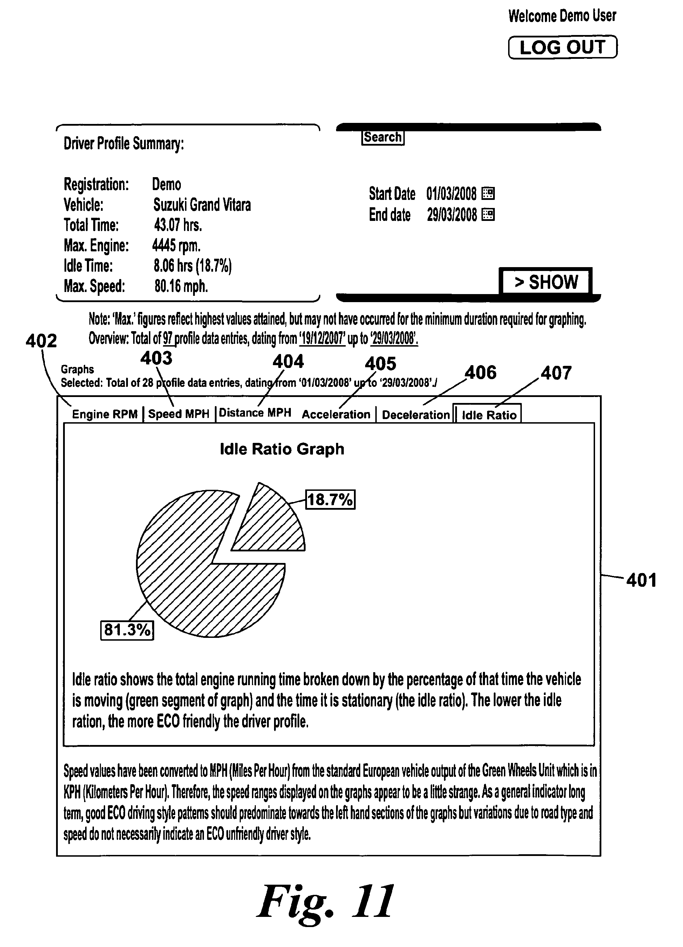

Figures 6 to 11 show examples of web pages for presentation of the ecological rating.

In Figure 6, the web page explains the rating system, the identifiers associated with the ecological rating being A to G, with A being the highest rating and indicating a driving style that produces low emissions and/or low fuel usage for that vehicle and G being the lowest rating and indicating a driving style that produces high emissions and/or high fuel usage for that vehicle. The web page displays the ratings for each characteristic, in this embodiment, total mileage, journey time, number of journeys, $CO_2$ emissions, engine revolutions (Harsh revving), sharp acceleration time, sharp deceleration time, time at constant speeds, time at speeds above 70mph, time for which the vehicle is idling while stationary, short journeys below 1 mile, $CO_2$ rating (g/km) and miles per gallon.

Each ecological rating is determined in accordance with the first embodiment described by ranking the vehicles based on the characteristic and grouping the vehicle based on where the vehicles are ranked. The groups are formed such that each group contains a set proportion of the vehicles (e.g. 1/7m of the vehicles), a first group consisting of the set proportion of vehicles having the highest values for the characteristic, a second group consisting of the set proportion of vehicles having the next highest values for the characteristic and so on to the last group which consists of the set proportion of vehicles having the lowest value for the characteristic. Identifiers A to G are allocated to the groups based upon how the characteristic is related to emissions and/or fuel usage. In this embodiment, identifier A is associated with low emissions and/or fuel usage and identifier G is associated with high emissions and/or fuel usage.

As can be seen from Figure 6, the processor 1 determines a new ecological rating for each new period, in this embodiment, each month, as well as an average rating over the whole time that ecological ratings have been determined for the vehicle.

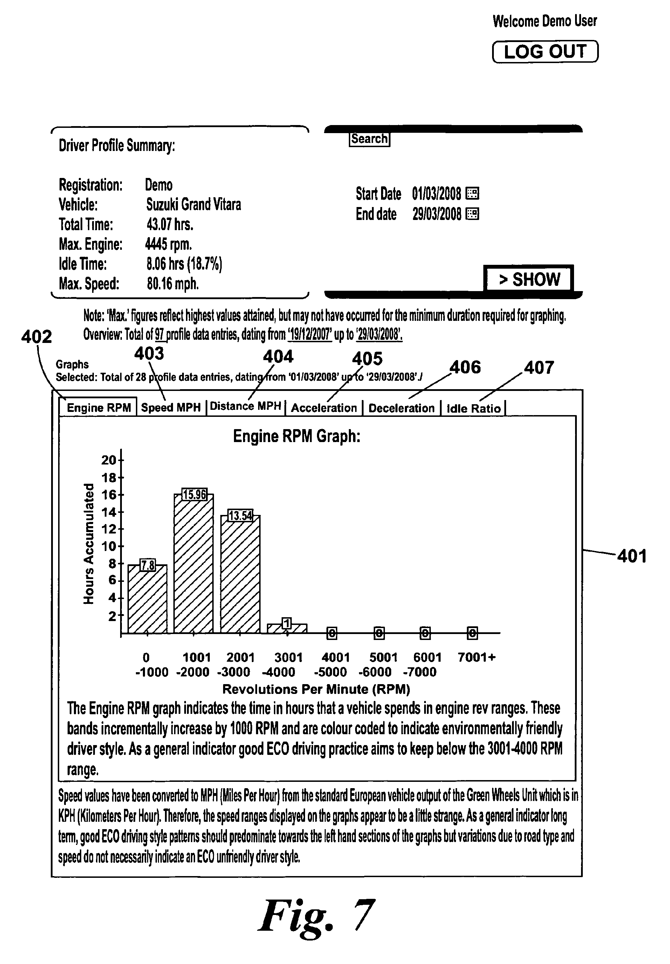

Figures 7 to 11 show another screen of the display. On this screen, the characteristics of the vehicle are displayed in a window 401. At the top of the window are provided tabs 402 to 407 that the user can select, for example with a mouse click, in order that the information on a different characteristic, engine RPM, speed, distance, acceleration, deceleration and idle ratio is displayed. In this embodiment the information is displayed as a series of histograms and a pie chart but other means of presenting the information could be used, such as tables or the like.

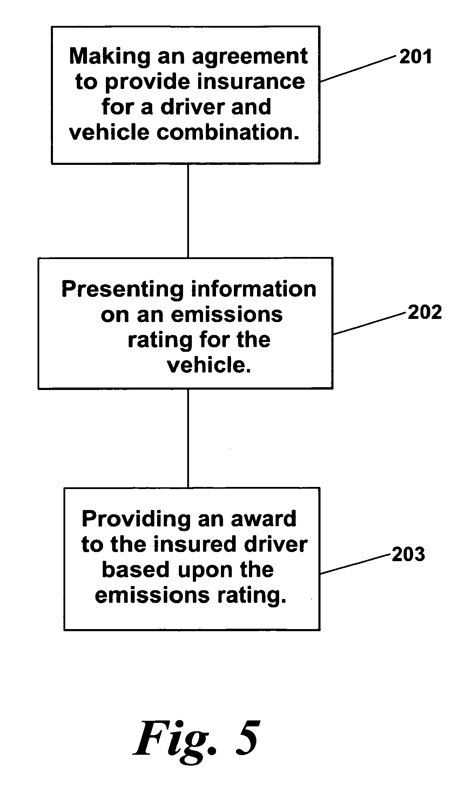

The server 5 may use the ecological ratings as part of a service agreement such as the provision of insurance. Figure 5 illustrates one embodiment of providing an insurance agreement in accordance with the invention. In step 201, an agreement is made between an insurance provider and a driver for the insurance provider to provide insurance for a driver and vehicle combination. The agreement may be made by communication over the telephone, the Internet, by writing or otherwise.

In response to making of the agreement, an account is established for the user on computer 7 and the processor is arranged to receive data from the relevant vehicle. The relevant vehicle may already comprise the required technology for communicating with processor 1. However, the method may also comprise fitting the vehicle with a transceiver and communication device for transmitting data collected by the in-vehicle processing unit of the vehicle to processor 1.

The processor 1 on receiving the data determines an ecological rating for the vehicle and, in step 202, this ecological rating is presented to the driver, for example on a webpage over the Internet. Alternatively or additionally, the ecological rating may be communicated to the insurance provider, for example by sending the ecological rating to server 5. In response to receiving the ecological rating the insurance provider may determine whether an award should be provided to the driver. The award may a reduction in the insurance premium, a monetary sum or simply acknowledgement of the achievement of the driver in obtaining that ecological rating.

In step 203, the award is provided to the driver,

It will be understood that the invention is not limited to the above-described embodiments but includes modifications and alterations.

For example, the selected comparable value may be a value of the characteristic for the vehicle in an earlier period and the ecological rating may be determined by comparing the value of the characteristic for the earlier period, such as an earlier month, to the value of the characteristic for a later period; such as the current month, and allocating an ecological rating based on changes in the value for the characteristic between these periods. For example, the ecological rating may be based on how much a driver has changed his/her driving style to reduce the environmental impact of his/her driving.

The ecological rating may be used in a number of processes not limited to the provision of insurance. For example, the ecological rating may be used for driver training. A manager of a fleet of vehicles/number of drivers may receive ecological ratings for the vehicles of the fleet and the drivers may be trained based on the ecological ratings. For example, a driver could be given additional training if the ecological rating achieved by that driver in one or more periods is below a predetermined level. In this way, the manager can use the ecological rating to identify drivers whose driving style produces higher than necessary emissions and/or fuel usage and provide appropriate training for that driver. Such a method may reduce the amount of emissions and/or fuel used by the fleet.

In yet a further embodiment, the ecological rating may be used to identify vehicles that are inefficient and have high emissions and/or fuel usage. In response to identifying a vehicle that has an ecological rating indicating high emissions and/or fuel usage, the method may comprise repairing and/or modifying the vehicle to improve the vehicles efficiency.

The modification may be achieved by remotely updating the ECU to change how the ECU controls the vehicle.

The selected comparable value used for determining the ecological rating may be a predetermined value for the characteristic, for example a value predetermined by the manufacturer of the vehicle, such as the rated mpg or $CO_2$ emissions: the manufacturers often determining these values based on what they believe is the best a driver can reasonably achieve with the vehicle. Alternatively, the predetermined value may be a standard value determined by an independent body, for example, values of emissions and/or fuel usage determined using test cycles. A number of Governmental organisations, such as the Environmental Protection Agency (EPA) and the UK Department of Environment, Transport and Regions (DEFRA), publish the results of test cycles carried out on vehicles and, in one embodiment, the invention uses these published results as a benchmark for the ecological rating. The vehicle characteristic database may comprise standard values for each vehicle type and the system is arranged to be regularly up-dated with standard values determined by these organisations.

The ecological rating may be determined using a function linking a characteristic of the vehicle to an ecological rating. The function may dictate how the ecological rating increases/decreases as one moves away from a benchmark value for that characteristic. For example, the function may have a shape similar to that of the Fermi-Dirac distribution with a midpoint located at the benchmark value. For example, the ecological rating *ER* for a vehicle *i* may be determined using:-

$$ER_i = \frac{A}{e^{(\varepsilon_i - \mu)/T} + 1},$$

wherein A is a constant defining the maximum magnitude of the ecological rating, $\varepsilon_r$ is a value for a characteristic of the vehicle, $\mu$ a constant determined from the benchmark value for that characteristic such that when $\varepsilon_i$ is equal to $\mu$ the ecological rating is half its maximum value and *T* is the "temperature" of the ecological rating dictating how quickly the function changes from the maximum to minimum ecological ratings. An advantage of such a function is that the steepest gradient occurs at the benchmark value. Accordingly, if the benchmark value is set to be the value that a driver is most likely to achieve, one would expect a dense grouping of drivers around this value. However, the function is able to provide fine separation for the densely populated drivers at the midpoint in terms of an ecological rating without giving extreme ecological rating for drivers located further away from the benchmark value.

In another embodiment, the function for determining the ecological rating may have a different shape, for example the function may be a line of constant gradient. The function chosen may depend on how the characteristic is linked to emissions from the vehicle. For example, acceleration has a non-linear relationship to emissions and fuel usage.

In another embodiment, the function may be used to determine an intermediate value, the vehicles being ranked and grouped together based on this intermediate value and the ecological rating for each vehicle being an identifier assigned to the group comprising the vehicle.

In one embodiment, the in-vehicle processing unit 18 is arranged to determine the ecological rating for the vehicle.

In one embodiment, the ecological rating comprises an emissions rating indicative of how a driver's driving style affects emissions from the vehicle and a fuel usage rating indicative of how a driver's driving style affects fuel usage. The invention may comprise comparing the emissions rating to the fuel usage rating and may further comprise determining engine efficiency from the comparison. It will be understood that the emissions rating and fuel usage rating are not absolute values of emissions or fuel usage but are values indicative of how the driver's driving style affects emissions or fuel usage from the vehicle.

Alternatively, the ecological rating may comprise one of the emissions rating and fuel usage rating.

Driving in a manner that improves the ecological rating may result in reduced wear and tear and safer driving as well as reduced emissions and/or fuel usage. Reduced wear and tear may reduce the maintenance and service costs for the vehicle. Reducing wear and tear may also help maintain the residual value of the vehicle.

**Claims**

1. A computer-implemented method for rating how a vehicle is driven comprising receiving data on a characteristic for each of a plurality of vehicles, wherein the characteristic is dependent upon how the vehicle is driven and there is a relationship between the characteristic and emissions from the vehicle and/or fuel usage, and determining an ecological rating for each vehicle based upon a value of the characteristic for the vehicle relative to a selected comparable value and how the characteristic is related to emissions from the vehicle and/or fuel usage.

2. A method according to claim 1, comprising calculating emissions and/or fuel usage for each vehicle from data on a plurality of characteristics for the vehicle.

3. A method according to claim 1 or claim 2, wherein determining the ecological rating comprises normalizing the characteristic to compensate for factors that contribute to the characteristic and are not related to how the vehicle is driven.

**4.** A method according to claim 3, wherein the characteristic is normalized to compensate for contributions to the characteristic resulting from one or more of traffic conditions, road conditions, environmental conditions and physical condition of the vehicle.

**5.** A method according to claim 3 or claim 4, wherein the characteristic is a value for distance per volume of fuel or distance per weight of particulate emissions.

**6.** A method according to any one of the preceding claims, wherein the ecological rating comprises an emissions rating based upon the value of the characteristic for the vehicle relative to the selected comparable value and how the characteristic is related to emissions from the vehicle.

**7.** A method according to any one of the preceding claims, wherein the ecological rating comprises a fuel usage rating based upon the value of the characteristic for the vehicle relative to the selected comparable value and how the characteristic is related to fuel usage.

**8.** A method according to any one of the preceding claims, wherein the selected comparable value is the value of the characteristic for other vehicles of the plurality of vehicles and determining the ecological rating for each vehicle comprises ranking the plurality of vehicles based upon the value of the characteristic for each vehicle and allocating an ecological rating to each vehicle based upon where the vehicle is ranked.

**9.** A method according to any one of the preceding claims, wherein the selected comparable value is a value of the characteristic for the vehicle for an earlier period.

**10.** A method according to any one of the preceding claims, wherein the selected comparable value is a predetermined value for the characteristic, for example, the predetermined value may be a value determined by the manufacturer of the vehicle or a standard value for the characteristic determined by an independent body.

**11.** A method according to claim 10, wherein the selected comparable value is a predetermined distance per volume of fuel or weight of particulate emissions and the characteristic is a measured value for distance per volume of fuel or distance per weight of particulate emissions for the vehicle.

**12.** A method according to any one of the preceding claims, wherein the ecological rating is determined by grouping the plurality of vehicles based on the characteristic into two or more groups, the ecological rating being an identifier associated with the group comprising the vehicle.

**13.** A method according to claim 12 wherein the plurality of vehicles are grouped by the position of the vehicles in a ranking.

**14.** A method according to any one of the preceding claims, wherein the data comprises data on more than one characteristic of the vehicles and the ecological rating comprises an individual rating for each characteristic.

**15.** A method according to any one of the preceding claims, wherein the data comprises data on more than one characteristic of the vehicles and the ecological rating comprises an overall rating determined from a combination of the ratings determined for each characteristic.

**16.** A method of providing insurance comprising making an agreement to provide insurance for a driver and vehicle combination and, in response to the making of the agreement, presenting information on an ecological rating for the vehicle determined in accordance with the method of any one of claims 1 to 15.

**17.** A method according to claim 16, wherein the agreement to provide insurance comprises the provision of awards to an insured under the agreement in return for the vehicle achieving a predetermined ecological rating.

**18.** A system for providing information about a vehicle comprising a communication link for communicating with an output device and a processor, the processor arranged to receive data on a characteristic for each of a plurality of vehicles, wherein the characteristic is dependent upon how the vehicle is driven and there is a relationship between the characteristic and emissions from the vehicle and/or fuel usage, determine an ecological rating for each vehicle, the ecological rating based upon a value of the characteristic for each vehicle relative to a selected comparable value and how the characteristic is related to emissions from the vehicle and/or fuel usage, and send the ecological rating to the output device via the communications link.

**19.** A system according to any one of claims 18, wherein the processor is arranged to communicate remotely with an electronic control unit of at least one of the vehicles to obtain the data.

**20.** A data carrier having instructions thereon that, when executed by a processor, cause the processor to carry out the method of any one of claims 1 to 15.

*Fig. 1*

Receive data on at
least one characteristic
for each of a
plurality of vehicles. — 101

Ranking the vehicles
based on the at least one
characteristic and
how that characteristic
is related to emissions
from the vehicle. — 102

Grouping the ranked
vehicles into seven
groups. — 103

Allocating each group
a letter A to G, the
emissions rating for a
vehicle being the letter of
the group containing
that vehicle. — 104

*Fig. 2*

Vehilce

17

18

Vehicle Inputs
Ignition On/Off
Location
Time and Date

Algorithms running within in-vehicle hardware

Fuel Usage
Trip Information
Driver Profiles
Vehicle State
Key Performance Indicators

Data transmission from the vehicle to host using radio or other methods

Host

Initial Host processing

Initial ECO rating

Vehicle mpg figures
Time and Date
Time and Date
Time and Date

Driver ECO Score

*Fig. 3*

Receive data on the measured
miles per gallon (mpg)
for each vehicle and normalize
the value for the mpg for
each vehicle.

301

Identify the type of vehicle
and retrieve a predetermined
(rated) mpg for that
vehicle type.

302

Determine an ecological
rating by comparing the
normalized mpg to the
rated mpg.

303

*Fig. 4*

Making an agreement to provide insurance for a driver and vehicle combination.   — 201

Presenting information on an emissions rating for the vehicle.   — 202

Providing an award to the insured driver based upon the emissions rating.   — 203

*Fig. 5*

Welcome Demo User

( LOG OUT )

## Your Green Wheel Rating

Welcome Demo User to your Green Wheels driving reports. Here you can view your driving performance for different factors that we know affect the amount of $CO_2$ emissions from your vehicle. Our Green Wheels rating system also allows you to compare your driving performamce against our other Green Wheels customers.

*An "A" rating means you are placed in the top group out of seven for a particular factor and you have a green driving style. A "G" rating means you are in the bottom group out of seven for a factor and your driving style could be contributing to higher levels of $CO^2$ emissions.*

Your Green Wheels rating
Your current rating is D
Your average rating is A

A
B
C
**Your RATING**   D
E
F
G

Your Driving Summary

|  | Your Driving Current Month | Your Average | Your Rating Current Month | Your Average |
|---|---|---|---|---|
| Mileage | 1052 | 666 | E | D |
| Journey Time (hours) | 42 | 24 | F | C |
| Number of Journeys | 168 | 127 | G | F |
| $CO_2$ Emissions (kg) | 356 | 229 | F | E |

Your Driving Style

|  | Your Driving Current Month | Your Average | Your Rating Current Month | Your Average |
|---|---|---|---|---|
| Harsh Revving | 2.3% | 5% | F | G |

# *Fig. 6*

**Green Wheels**

| | | | | |
|---|---|---|---|---|
| Sharp Acceleration Time | 1.9% | 2% | E | E |
| Sharp Braking | 3.7% | 3.8% | G | G |
| Time at Constant Speeds | 47.5% | 46.4% | A | A |
| High Speeds > 70mph | 19.3% | 21.4% | A | A |
| Engine Idling | 18.6% | 18.2% | G | G |
| Short Journeys < 1 mile | 3% | 2.6% | A | B |

**Your Vehicle Summary**

| | Your Car Suzuki Grand Vitara | Pilot Average Total Vehicles 15 | Your Rating |
|---|---|---|---|
| CO2 Rating (g/km) | 210 | 163 | G |
| MPG (combined) | 32.5 | 46.3 | G |

*Fig. 6* (cont.)

EP 2 116 968 A1

Welcome Demo User

( LOG OUT )

**Driver Profile Summary:**

| | | Search |
| --- | --- | --- |

Registration: Demo
Vehicle: Suzuki Grand Vitara
Total Time: 43.07 hrs.
Max. Engine: 4445 rpm.
Idle Time: 8.06 hrs (18.7%)
Max. Speed: 80.16 mph.

Start Date 01/03/2008 🔳
End date 29/03/2008 🔳

**> SHOW**

Note: 'Max.' figures reflect highest values attained, but may not have occurred for the minimum duration required for graphing.
Overview: Total of 97 profile data entries, dating from '19/12/2007' up to '29/03/2008'.

**402**

Graphs **403** **404** **405** **406** **407**
Selected: Total of 28 profile data entries, dating from '01/03/2008' up to '29/03/2008'./

| Engine RPM | Speed MPH | Distance MPH | Acceleration | Deceleration | Idle Ratio |
| --- | --- | --- | --- | --- | --- |

**Engine RPM Graph:**

**401**

The Engine RPM graph indicates the time in hours that a vehicle spends in engine rev ranges. These bands incrementally increase by 1000 RPM and are colour coded to indicate environmentally friendly driver style. As a general indicator good ECO driving practice aims to keep below the 3001-4000 RPM range.

Speed values have been converted to MPH (Miles Per Hour) from the standard European vehicle output of the Green Wheels Unit which is in KPH (Kilometers Per Hour). Therefore, the speed ranges displayed on the graphs appear to be a little strange. As a general indicator long term, good ECO driving style patterns should predominate towards the left hand sections of the graphs but variations due to road type and speed do not necessarily indicate an ECO unfriendly driver style.

*Fig. 7*

Welcome Demo User

[ LOG OUT ]

Driver Profile Summary:                              [Search]

Registration:    Demo
Vehicle:         Suzuki Grand Vitara          Start Date   01/03/2008 ▦
Total Time:      43.07 hrs.                   End date     29/03/2008 ▦
Max. Engine:     4445 rpm.
Idle Time:       8.06 hrs (18.7%)
Max. Speed:      80.16 mph.                              [ > SHOW ]

Note: 'Max.' figures reflect highest values attained, but may not have occurred for the minimum duration required for graphing.

**402**       Overview: Total of 97 profile data entries, dating from '19/12/2007' up to '29/03/2008'.

                **403**           **404**        **405**
Graphs
Selected: Total of 28 profile data entries, dating from '01/03/2008' up to '29/03/2008'.      **406**      **407**

| Engine RPM | Speed MPH | Distance MPH | Acceleration | Deceleration | Idle Ratio |

**Distance MPH Graph:**

Distance MPH indicates the total distance travelled within specific speed ranges; it is not related to time within speed bands. Again this graph will vary between individual drivers being dependent on the general type of road being used on a regular basis.

Speed values have been converted to MPH (Miles Per Hour) from the standard European vehicle output of the Green Wheels Unit which is in KPH (Kilometers Per Hour). Therefore, the speed ranges displayed on the graphs appear to be a little strange. As a general indicator long term, good ECO driving style patterns should predominate towards the left hand sections of the graphs but variations due to road type and speed do not necessarily indicate an ECO unfriendly driver style.

**401**

## Fig. 8

LOG OUT

---

Driver Profile Summary:

Search

Registration:  Demo
Vehicle:       Suzuki Grand Vitara
Total Time:    43.07 hrs.
Max. Engine:   4445 rpm.
Idle Time:     8.06 hrs (18.7%)
Max. Speed:    80.16 mph.

Start Date  01/03/2008
End date    29/03/2008

> SHOW

Note: 'Max.' figures reflect highest values attained, but may not have occurred for the minimum duration required for graphing.

**402**    Overview: Total of 97 profile data entries, dating from '19/12/2007' up to '29/03/2008'.

**403**          **404**          **405**          **406**     **407**

Graphs
Selected: Total of 28 profile data entries, dating from '01/03/2008' up to '29/03/2008'.

| Engine RPM | Speed MPH | Distance MPH | Acceleration | Deceleration | Idle Ratio |

### Acceleration Graph:

This graph shows the time that a vehicle spends in particular acceleration ranges. Acceleration is the measure of how quickly a vehicle increases its speed which can be from either stationary or from a constant travelling speed. Good ECO driving practice aims to ensure that graph bars are predominantly below $2m/s^2$. An acceleration value of $2m/s^2$ is equivalent to a vehicle travelling from 0 to 60 MPH in about 13 seconds.

Speed values have been converted to MPH (Miles Per Hour) from the standard European vehicle output of the Green Wheels Unit which is in KPH (Kilometers Per Hour). Therefore, the speed ranges displayed on the graphs appear to be a little strange. As a general indicator long term, good ECO driving style patterns should predominate towards the left hand sections of the graphs but variations due to road type and speed do not necessarily indicate an ECO unfriendly driver style.

**401**

## Fig. 9

Welcome Demo User

**LOG OUT**

Driver Profile Summary:

|Search|

| Registration: | Demo |
| Vehicle: | Suzuki Grand Vitara |
| Total Time: | 43.07 hrs. |
| Max. Engine: | 4445 rpm. |
| Idle Time: | 8.06 hrs (18.7%) |
| Max. Speed: | 80.16 mph. |

Start Date  01/03/2008
End date   29/03/2008

**> SHOW**

Note: 'Max.' figures reflect highest values attained, but may not have occurred for the minimum duration required for graphing.

**402** Overview: Total of 97 profile data entries, dating from '19/12/2007' up to '29/03/2008'.

**403**       **404**       **405**

Graphs                                          **406**    **407**
Selected: Total of 28 profile data entries, dating from '01/03/2008' up to '29/03/2008'.

Engine RPM | Speed MPH | Distance MPH   Acceleration | Deceleration | Idle Ratio |

**Deceleration Graph:**

**401**

This graph shows the time that a vehicle spends in particular deceleration ranges. Deceleration is the measure of how quickly a vehicle slows down which can be from either a constant speed or acceleration phase. This can include both braking and use of the gear box to reduce vehicle speed. Good ECO driving practice aims to ensure that graph bars are predominantly below $2m/s^2$.

Speed values have been converted to MPH (Miles Per Hour) from the standard European vehicle output of the Green Wheels Unit which is in KPH (Kilometers Per Hour). Therefore, the speed ranges displayed on the graphs appear to be a little strange. As a general indicator long term, good ECO driving style patterns should predominate towards the left hand sections of the graphs but variations due to road type and speed do not necessarily indicate an ECO unfriendly driver style.

## *Fig. 10*

Welcome Demo User

[ LOG OUT ]

Driver Profile Summary:

[Search]

Registration: Demo
Vehicle: Suzuki Grand Vitara
Total Time: 43.07 hrs.
Max. Engine: 4445 rpm.
Idle Time: 8.06 hrs (18.7%)
Max. Speed: 80.16 mph.

Start Date 01/03/2008
End date 29/03/2008

[ > SHOW ]

Note: 'Max.' figures reflect highest values attained, but may not have occurred for the minimum duration required for graphing.

**402**

Overview: Total of 97 profile data entries, dating from '19/12/2007' up to '29/03/2008'.

**403** **404** **405** **406** **407**

Graphs
Selected: Total of 28 profile data entries, dating from '01/03/2008' up to '29/03/2008'./

| Engine RPM | Speed MPH | Distance MPH | Acceleration | Deceleration | Idle Ratio |

**Idle Ratio Graph**

[18.7%]

[81.3%]

Idle ratio shows the total engine running time broken down by the percentage of that time the vehicle is moving (green segment of graph) and the time it is stationary (the idle ratio). The lower the idle ration, the more ECO friendly the driver profile.

**401**

Speed values have been converted to MPH (Miles Per Hour) from the standard European vehicle output of the Green Wheels Unit which is in KPH (Kilometers Per Hour). Therefore, the speed ranges displayed on the graphs appear to be a little strange. As a general indicator long term, good ECO driving style patterns should predominate towards the left hand sections of the graphs but variations due to road type and speed do not necessarily indicate an ECO unfriendly driver style.

*Fig. 11*

Europäisches
Patentamt
European
Patent Office
Office européen
des brevets

## EUROPEAN SEARCH REPORT

Application Number

EP 08 25 1621

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | The technical aspects identified in the present application (Art. 92 EPC) are considered part of common general knowledge. Due to their notoriety no documentary evidence is found to be required. For further details see the accompanying Opinion and the reference below.<br>XP002456252<br>----- | 1-20 | INV.<br>G06Q30/00 |

TECHNICAL FIELDS
SEARCHED      (IPC)

G06Q

The present search report has been drawn up for all claims

| Place of search | Date of completion of the search | Examiner |
|---|---|---|
| Munich | 10 June 2009 | Gardiner, Alexander |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                             

& : member of the same patent family, corresponding
document

EPO FORM 1503 03.82 (P04C01)